# FASCICULE DE BREVET EUROPEEN

(11) **EP 1 234 109 B1**
(45) Date de publication et mention de la délivrance du brevet: **28.12.2005**
(21) Numéro de dépôt: 00967964.8
(22) Date de dépôt: 06.10.2000
(51) Int. Cl.: F02D 41/40, F02D 41/02, F01N 9/00, F01N 3/18

(54) **PROCEDE D'INJECTION DE CARBURANT POUR UN MOTEUR A COMBUSTION**
KRAFTSTOFFEINSPRITZVERFAHREN FÜR EINE BRENNKRAFTMASCHINE
FUEL INJECTION METHOD FOR A COMBUSTION ENGINE

(30) Priorité: 08.10.1999 FR 9912547
(43) Date de publication de la demande: 28.08.2002
(73) Titulaire: Renault s.a.s., 92100 Boulogne Billancourt (FR)
(72) Inventeur: CHAUMEAUX, Romuald, F-91290 Arpajon (FR); LAUGA, Vincent, 69005 Lyon (FR); THUAULT, Benoît, F-91510 Lardy (FR)
(74) Mandataire: Cémeli, Eric Philippe Laurent
(86) Numéro de dépôt international: PCT/FR2000/002779
(87) Numéro de publication internationale: WO 2001/027455

(56) Documents cités:
- EP-A- 0 732 485
- DE-A- 19 717 805
- US-A- 4 881 369
- US-A- 5 826 425
- PATENT ABSTRACTS OF JAPAN vol. 009, no. 235 (M-415), 21 septembre 1985 (1985-09-21) & JP 60 090953 A (MITSUBISHI JIDOSHA KOGYO KK), 22 mai 1985 (1985-05-22)

## Description

L'invention concerne un procédé d'injection de carburant pour un moteur à combustion.

L'invention concerne plus particulièrement un procédé d'injection de carburant pour un moteur à combustion, notamment un moteur diesel ou à essence à mélange pauvre, pour régénérer un système de traitement des gaz d'échappement tel qu'un filtre à particules par combustion des particules stockées dans le filtre.

Les moteurs diesels et certains moteurs à essence émettent des substances polluantes telles que des particules.

On connaît des systèmes de traitement des gaz d'échappement qui permettent de diminuer les émissions de particules.

En particulier une méthode consiste à les filtrer à l'aide d'un filtre appelé filtre à particules. Ce dernier se colmate et il est donc nécessaire de le régénérer périodiquement.

Pour provoquer la combustion des particules, il faut les porter à leur température de combustion qui est d'environ 550°C. Cependant, les gaz d'échappement des moteurs diesels n'atteignent que rarement cette température puisque, par exemple en ville, la température des gaz d'échappement évolue entre 150 et 250 °C. Il faut alors augmenter spécifiquement la température des gaz d'échappement, lors de la phase de régénération, de façon qu'ils atteignent la température de combustion des particules dans le filtre à particules.

Différents systèmes ont été proposés.

Des systèmes de chauffage par résistance électrique, notamment par des grilles chauffantes, permettent de porter la température des gaz d'échappement à une valeur suffisante pour provoquer la combustion des particules dans le filtre. Cependant, ces systèmes nécessitent une puissance électrique importante qu'il n'est pas toujours possible de fournir. De plus, ils compliquent la conception de la ligne d'échappement.

D'autres systèmes proposent d'augmenter la température des gaz échappement par l'injection d'une quantité supplémentaire de carburant dans au moins une des chambres de combustion sous la forme d'une post-injection. C'est-à-dire, qu'après avoir injecté la quantité de carburant nécessaire au fonctionnement "classique" du moteur, une quantité supplémentaire de carburant est injectée dans un second temps. Une partie de cette quantité de carburant additionnelle s'enflamme en produisant une augmentation de la température des gaz d'échappement, le reste de cette quantité est transformé en produits d'oxydation partielle comme le monoxyde de carbone CO et les hydrocarbures HC.

Pour que la température atteigne la température de combustion des suies, il est nécessaire que les produits d'oxydation partielle réagissent par des réactions exothermiques avant leur arrivée dans le filtre à particules. Les réactions exothermiques sont obtenues lors de la traversée d'un catalyseur d'oxydation.

Ce système nécessite donc la présence d'un catalyseur d'oxydation en amont du filtre à particules et un système d'injection apte à produire la post-injection.

Le document US-A-5.826.425 propose un tel procédé d'auto-initiation de la régénération d'un filtre à particules d'un moteur diesel qui consiste à fournir une post-injection de carburant, en plus de la phase d'injection principale, pour augmenter la température des gaz d'échappement du moteur.

Ce document propose aussi que la post-injection soit réalisée immédiatement après l'injection principale comme une seule injection d'une durée égale à la somme des durées de l'injection principale et de la post-injection.

Le document US-A-5 826 425 divulgue un procédé d'injection de carburant dans au moins un des cylindres d'un moteur à combustion notamment un moteur diesel, du type qui comporte l'injection d'une quantité principale de carburant dépendant du point de fonctionnement du moteur lors d'une phase de regénération d'un système de traitement des gaz d'échappement tel qu'un filtre à particules, ladite quantité principale est augmentée et le début de l'injection de la quantité principale de carburant est retardé.

Dans le but de fournir une solution à ces inconvénients, l'invention propose un procédé d'injection de carburant dans au moins un des cylindres d'un moteur à combustion, notamment un moteur diesel, du type qui comporte l'injection d'une quantité principale de carburant dépendant du point de fonctionnement du moteur, lors d'une phase de régénération d'un système de traitement des gaz d'échappement tel qu'un filtre à particules, ladite quantité principale est augmentée et le début de l'injection de la quantité principale de carburant (Q1) est retardé par rapport au point mort haut du piston du cylindre correspondant.

Selon d'autres caractéristiques du procédé :
- la quantité principale augmentée est obtenue par au moins deux étapes consécutives d'injection de quantités de carburant ;
- le début de l'injection de la quantité principale de carburant est déphasé lors de la phase de régénération du système de traitement des gaz d'échappement ;
- le début de l'injection de la quantité principale de carburant est retardé lors de la phase de régénération du système de traitement des gaz d'échappement d'une durée prédéterminée selon le point de fonctionnement du moteur ;
- l'injection de la quantité principale de carburant est précédée d'une étape d'injection d'une autre quantité prédéterminée de carburant dépendant du point de fonctionnement du moteur ;
- ladite autre quantité prédéterminée de carburant est augmentée lors de la phase de régénération du système de traitement ;
- le point de fonctionnement du moteur, ladite autre quantité prédéterminée de carburant est augmentée lors de la phase de régénération du système de traitement ;
- le début de l'injection de ladite autre quantité prédéterminée de carburant est déphasé lors de la phase de régénération du système de traitement ;
- le début de l'injection de ladite autre quantité prédéterminée de carburant est retardé lors de la phase de régénération du système de traitement d'une valeur prédéterminée selon le point de fonctionnement du moteur.

D'autres caractéristiques et avantages apparaîtront à la lecture de la description détaillée qui suit pour la compréhension de laquelle on se reportera aux figures annexées parmi lesqueis :
- la figure 1 représente schématiquement une ligne d'échappement d'un moteur à combustion équipée d'un catalyseur et d'un filtre à particules ;
- la figure 2 est un diagramme qui représente les quantités de carburant injectées en fonction de l'angle du vilebrequin par rapport au point mort haut du piston, selon un premier exemple de l'état de la technique ;
- la figure 3 est un diagramme qui représente la quantité de carburant injectée, selon un premier mode de réalisation de l'invention, en fonction de l'angle du vilebrequin par rapport au point mort haut du piston ;
- la figure 4 est un diagramme similaire à celui de la figure 2 selon un second exemple de l'état de la technique comportant une pré-injection ; et
- la figure 5 est un diagramme similaire à celui de la figure 3 selon un second mode de réalisation de l'invention.

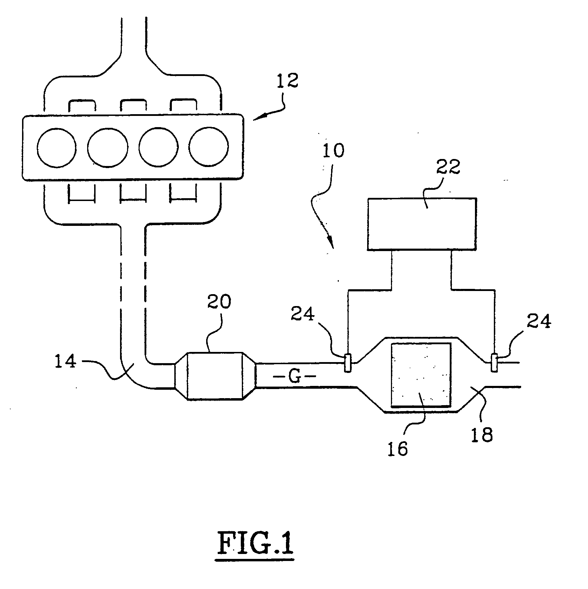

On a représenté sur la figure 1, un système de traitement 10 des gaz d'échappement G d'un moteur à combustion 12. Le moteur 12 est un moteur diesel ou un moteur à essence fonctionnant en mélange pauvre tel qu'un moteur à essence à injection directe.

Une ligne 14 d'échappement permet l'évacuation des gaz G du moteur vers l'atmosphère. Un système de traitement destiné à purifier les gaz d'échappement G est interposé dans la ligne 14. Il se compose principalement d'un filtre à particules 16 agencé dans une chambre 18.

Un catalyseur d'oxydation 20 est inséré dans la ligne 14 d'échappement en amont du filtre à particules 16.

Avantageusement, le filtre à particules 16 peut être recouvert d'une imprégnation catalytique.

Le filtre à particules 16 se présente avec une face d'entrée et une face de sortie des gaz G. II est composé par exemple de canaux alternativement bouchés et ouverts en entrée et qui sont inversement ouverts et bouchés en sortie. Les parois du filtre à particules 16 sont poreuses.

L'injection du carburant dans le moteur 12 est commandée par un système électronique de commande 22 qui permet de gérer la loi d'injection de carburant dans les chambres de combustion.

Des moyens de mesure 24, tels que des capteurs de pression et des capteurs de température, sont disposés sur la ligne d'échappement et sont reliés au système électronique de commande 22.

Le fonctionnement du système de traitement 10 selon l'état de la technique est le suivant.

Les gaz d'échappement G produits par le moteur 12 sont envoyés dans la ligne 14.

Lors de leur passage dans la chambre 18 les particules contenues dans les gaz G sont arrêtées par le filtre à particules 16.

Périodiquement les particules ainsi piégées dans le filtre à particules 16 sont brûlées au cours d'une phase de régénération.

Les moyens de mesure 24 transmettent au système électronique de commande 22 des informations représentatives du niveau de chargement du filtre à particules 16.

Le système électronique de commande 22 prend en compte le niveau de chargement du filtre à particules, ainsi que le point de fonctionnement du moteur, pour déclencher la phase de régénération.

La régénération du filtre à particules 16 nécessite d'atteindre une température des gaz d'échappement supérieure ou égale à la température de combustion des particules, c'est-à-dire d'environ 550°C. Il faut donc, dans certains cas, diminuer la température de combustion des particules pour favoriser la phase de régénération, ou augmenter la température des gaz d'échappement.

Plusieurs solutions peuvent être mises en oeuvre de façon indépendante ou concomitante.

L'ajout dans le carburant d'un additif chimique particulier permet d'augmenter les cinétiques de combustion des particules et par conséquent d'abaisser leur température de combustion sur le filtre à particules.

Le filtre à particules 16 peut être recouvert d'une imprégnation particulière appelée phase catalytique qui permet d'abaisser la température de combustion des particules. À titre d'exemple, on peut envisager l'utilisation d'un catalyseur métallique supporté par le filtre.

De plus, le catalyseur 20 situé en amont du filtre à particules 16 permet de convertir les hydrocarbures imbrûlés HC et le monoxyde de carbone CO en dioxyde de carbone CO₂ par oxydation avec l'oxygène. La réaction d'oxydation est exothermique ce qui participe à l'augmentation de la température des gaz d'échappement G.

D'autres solutions sont mises en oeuvre ponctuellement, lorsque la température des gaz d'échappement G en amont du filtre à particules 16 est inférieure à la température de combustion des particules, et lorsque le filtre à particules 16 doit être régénéré.

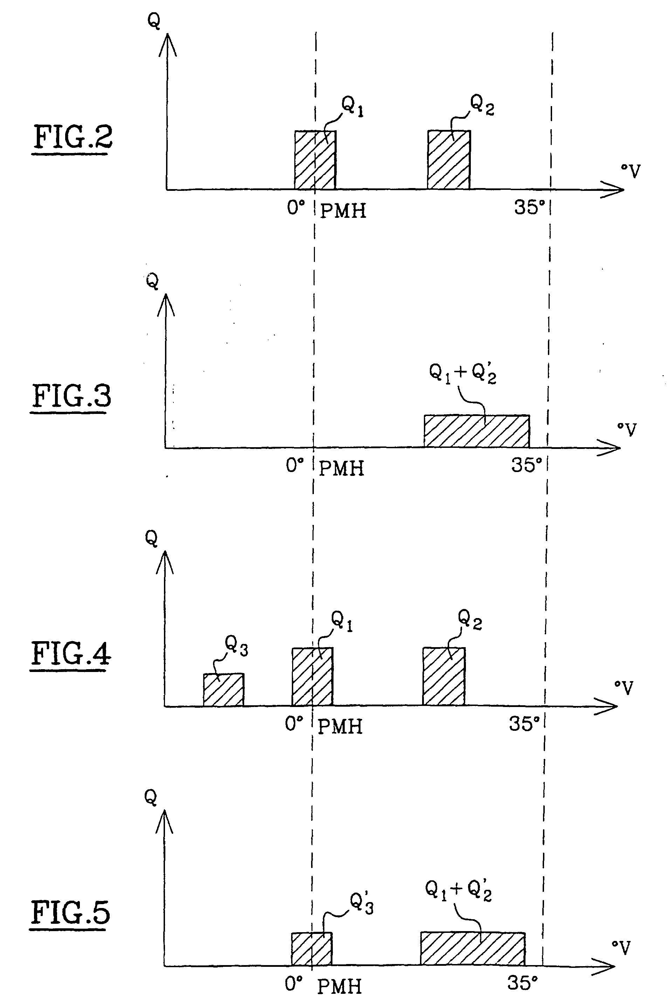

Parmi celles-ci, conformément à la figure 2, une quantité supplémentaire Q2 de carburant pour chauffer les gaz d'échappement G, est injectée dans la chambre de combustion du moteur après l'injection, au voisinage du point mort haut PMH, d'une quantité principale de carburant Q1 destinée à fournir le couple moteur.

La quantité supplémentaire Q2 subit une combustion partielle, qui fournit quasiment uniquement de l'énergie thermique, dont les produits d'oxydation partielle vont ensuite s'oxyder dans la ligne 14 d'échappement et provoquer une élévation de la température des gaz d'échappement G. L'oxydation se produit principalement lors de la traversée du catalyseur d'oxydation 20.

Selon un premier mode de réalisation, l'invention consiste dans l'injection d'une quantité supplémentaire Q2' de carburant dans la chambre de combustion du moteur 12, la quantité Q2' est groupée avec l'injection de la quantité principale Q1 comme cela est schématisé à la figure 3.

L'injection de la quantité de carburant Q2' peut, par exemple, être fusionnée à l'injection de la quantité principale Q1 ce qui se traduit par une injection unique d'une quantité de carburant Q1+Q2', ou bien l'injection de la quantité de carburant Q2' peut être "accolée" à la quantité principale Q1 de carburant sous la forme d'une deuxième injection immédiatement consécutive à l'injection de la quantité principale Q1.

L'injection regroupée des quantités principale Q1 et supplémentaire Q2' a plusieurs effets.

La combustion de la quantité supplémentaire Q2' de carburant étant intégrée à la quantité principale Q1, elle est plus complète, car les conditions, et notamment le mélange air-carburant, sont meilleures. Cela permet d'une part, de réduire au maxinium la production de produits d'oxydation partielle tels que l'oxyde de carbone CO et les hydrocarbures imbrûlés HC et, par conséquent, de diminuer les dimensions du catalyseur d'oxydation 20, voire de le supprimer et, d'autre part d'accroître l'augmentation de température des gaz d'échappement G. L'injection regroupée des quantités principale Q1 et supplémentaire Q2' accroît, du fait de la combustion plus complète, plus fortement la température des gaz d'échappement G que lorsque les injections des quantités principale Q1 et supplémentaire Q2' sont nettement séparées.

De plus, l'injection de la quantité Q1+Q2' est retardée par rapport au point mort haut PMH du piston du moteur 12, conformément à la figure 3.

Le retard par rapport au point mort haut PMH du piston est compris entre 0 et 35 degrés du vilebrequin. Cette valeur de 35 degrés du vilebrequin de retard, qui correspond à la limite au-delà de laquelle le carburant injecté dans la chambre de combustion s'infiltre entre les parois de la chambre de combustion et les segments du piston et se mélange avec l'huile de lubrification du moteur, est donnée à titre d'exemple et varie selon les moteurs.

Le retard de l'injection permet de limiter l'incidence sur le couple de l'augmentation de la quantité principale de carburant.

En effet, le couple moteur est fonction de la quantité principale et de l'instant de début d'injection du carburant dans la chambre de combustion. L'augmentation de la quantité principale de carburant, provoque l'augmentation du couple moteur, alors que le retard de l'instant du début de l'injection du carburant le diminue. Ainsi, en augmentant d'une quantité Q2' la quantité principale de carburant et en retardant l'instant du début de l'injection, le couple moteur reste égal à celui obtenu par l'injection de la quantité principale Q1 au voisinage du point mort haut PMH du piston.

Ce premier mode de réalisation est avantageux car, pour un couple moteur et une température des gaz d'échappement donnés, il permet de réduire la somme des quantités principale Q1 et supplémentaire Q2' par rapport à l'état de la technique. C'est-à-dire que la somme des quantités Q1 et Q2' est inférieure à la somme des quantités Q1 et Q2.

De plus, la combustion du carburant étant plus complète, la production des produits d'oxydation est fortement diminuée, ce qui permet, de réduire les dimensions du catalyseur 20, voire de le supprimer. Enfin, l'injection de carburant étant unique le système électronique de contrôle 22 est simplifié puisque la loi d'injection comprend une seule injection, au lieu d'une injection principale et d'une injection supplémentaire.

Selon un deuxième exemple de l'état de la technique illustré à la figure 4, il est connu d'injecter une quantité prédéterminée Q3 ou quantité pilote, avant l'injection de la quantité Q1. La quantité Q3 peut servir à diminuer le bruit lié à la combustion de la quantité principale motrice Q1.

Le second mode de réalisation de l'invention propose de réaliser l'injection décalée de la quantité Q1+Q2' conformément au premier mode de réalisation, et d'injecter une quantité prédéterminée Q3' augmentée et de la décaler de façon à la rapprocher du point mort haut PMH du piston. L'augmentation de la quantité prédéterminée Q3' dépend avantageusement du point de fonctionnement du moteur 12.

La quantité additionnelle Q3' augmentée et décalée permet alors de fournir un surcroît de couple qui est lié à l'augmentation de la quantité de carburant injectée lors de la pré-injection.

Le couple moteur est alors fourni d'une part par la quantité additionnelle Q3' augmentée et décalée et, d'autre part, par l'injection décalée de Q1+Q2'.

Il est alors possible de décaler de façon optimum l'injection de la quantité Q1+Q2'. En effet, plus cette dernière est injectée tard, meilleur est l'accroissement de la température des gaz d'échappement G. Cependant cela provoque une perte de couple que l'augmentation et le décalage de la quantité Q3' permettent de compenser.

Tout comme le premier mode de réalisation, le second mode de réalisation de l'invention, permet d'améliorer les performances du procédé de régénération du filtre à particules 16. En effet, pour une quantité globale de carburant injectée selon l'invention, la température des gaz d'échappement est plus élevée que si cette même quantité globale de carburant est injectée selon l'état de la technique.

De plus, de façon similaire au premier mode de réalisation, le procédé selon le second mode de réalisation de l'invention nécessite un système électronique de contrôle 22 plus simple puisqu'il n'a que deux injections à gérer au lieu de trois.

## Revendications

1. Procédé d'injection de carburant dans au moins un des cylindres d'un moteur à combustion (12), notamment un moteur diesel, du type qui comporte l'injection d'une quantité principale de carburant (Q1) dépendant du point de fonctionnement du moteur (12), lors d'une phase de régénération d'un système de traitement des gaz d'échappement (G) tel qu'un filtre à particules (16), ladite quantité principale est augmentée (Q1+Q2'), **caractérisé en ce que**, le début de l'injection de la quantité principale de carburant (Q1) est retardé par rapport au point mort haut du piston du cylindre correspondant.

2. Procédé d'injection selon la revendication précédente, **caractérisé en ce que** le début de l'injection de la quantité principale de carburant (Q1) est réalisé lorsque le piston est dans une position angulaire comprise entre le point mort haut et 35° du vilebrequin après le point mort haut.

3. Procédé d'injection selon l'une des revendications 1 ou 2, **caractérisé en ce que** la durée du retard du début de l'injection de la quantité principale de carburant (Q1) est déterminée selon le point de fonctionnement du moteur (12).

4. Procédé d'injection selon l'une quelconque des revendications précédentes, **caractérisé en ce que** la quantité principale augmentée (Q1+Q2') est obtenue par au moins deux étapes consécutives d'injection de quantités de carburant (Q1, Q2').

5. Procédé d'injection selon l'une quelconque des revendications précédentes, **caractérisé en ce que** l'injection de la quantité principale de carburant (Q1) est précédée d'une étape d'injection d'une autre quantité prédéterminée de carburant (Q3) dépendant du point de fonctionnement du moteur (12).

6. Procédé selon la revendication précédente, **caractérisé en ce que** ladite autre quantité prédéterminée de carburant (Q3) est augmentée lors de la phase de régénération du système de traitement.

7. Procédé selon revendication 5, **caractérisé en ce que**, selon le point de fonctionnement du moteur (12), ladite autre quantité prédéterminée de carburant (Q3) est augmentée lors de la phase de régénération du système de traitement.

8. Procédé selon l'une quelconque des revendications 5 à 7, **caractérisé en ce que** le début de l'injection de ladite autre quantité prédéterminée de carburant (Q3) est déphasé lors de la phase de régénération du système de traitement.

9. Procédé selon la revendication précédente, **caractérisé en ce que** le début de l'injection de ladite autre quantité prédéterminée de carburant (Q3) est retardé lors de la phase de régénération du système de traitement d'une valeur prédéterminée selon le point de fonctionnement du moteur (12).

## Patentansprüche

1. Kraftstoffeinspritzverfahren in mindestens einen der Zylinder eines Verbrennungsmotors (12), insbesondere eines Dieselmotors, von der Art, welches das Einspritzen einer Haupt-Menge von Kraftstoff (Q1) abhängig vom Betriebspunkt des Motors (12) umfasst, wobei während einer Regenerierungsphase eines Systems zur Behandlung von Abgasen (G), wie z.B. einem Partikelfilter (16), die Haupt-Menge erhöht wird (Q1+Q2'), **dadurch gekennzeichnet, dass** der Beginn der Einspritzung der Haupt-Menge von Kraftstoff (Q1) im Verhältnis zum oberen Totpunkt des Kolbens des entsprechenden Zylinders verzögert wird.

2. Einspritzverfahren nach dem vorangegangenen Anspruch, **dadurch gekennzeichnet, dass** der Beginn der Einspritzung der Haupt-Menge an Kraftstoff (Q1) ausgeführt wird, wenn der Kolben in einer Winkelstellung ist, welche enthalten ist zwischen dem oberen Totpunkt und 35° der Kurbelwelle nach dem oberen Totpunkt.

3. Einspritzverfahren nach einem der Ansprüche 1 oder 2, **dadurch gekennzeichnet, dass** die Dauer der Verzögerung des Beginns der Einspritzung der Haupt-Menge an Kraftstoff (Q1) gemäß dem Betriebspunkt des Motors (12) bestimmt wird.

4. Einspritzverfahren nach irgendeinem der vorangegangenen Ansprüche, **dadurch gekennzeichnet, dass** die erhöhte Haupt-Menge (Q1+Q2') durch mindestens zwei aufeinanderfolgende Schritte einer Einspritzung von Kraftstoffmengen (Q1, Q2') erhalten wird.

5. Einspritzverfahren gemäß irgendeinem der vorangegangenen Ansprüche, **dadurch gekennzeichnet, dass** der Einspritzung der Haupt-Menge an Kraftstoff (Q1) ein Schritt einer Einspritzung einer anderen, vorbestimmten Menge von Kraftstoff (Q3) abhängig vom Betriebspunkt des Motors (12) vorausgeht.

6. Verfahren nach dem vorangegangenen Anspruch, **dadurch gekennzeichnet, dass** die andere vorherbestimmte Menge von Kraftstoff (Q3) während der Phase der Regenerierung des Behandlungssystems erhöht wird.

7. Verfahren nach Anspruch 5, **dadurch gekennzeichnet, dass** die andere, vorherbestimmte Menge an Kraftstoff (Q3) gemäß dem Betriebspunkt des Motors (12) während der Phase der Regenerierung des Behandlungssystems erhöht wird.

8. Verfahren nach irgendeinem der Ansprüche 5 bis 7, **dadurch gekennzeichnet, dass** der Beginn der Einspritzung der anderen, vorherbestimmten Menge an Kraftstoff (Q3) während der Phase der Regenerierung des Behandlungssystems phasenverschoben ist.

9. Verfahren nach dem vorangegangenen Anspruch, **dadurch gekennzeichnet, dass** der Beginn der Einspritzung der anderen, vorherbestimmten Menge an Kraftstoff (Q3) während der Phase der Regenerierung des Behandlungssystems um einen gemäß dem Betriebspunkt des Motors (12) vorherbestimmten Wert verzögert wird.

## Claims

1. A process for injecting fuel into at least one of the cylinders of a combustion engine (12), in particular a diesel engine, of the type which comprises the injection of a main quantity of fuel (Q1) which is dependent on the operating point of the engine (12), in a phase for regeneration of a system for treatment of the exhaust gases (G) such as a particulate filter (16) said main quantity is increased (Q1+Q2'), **characterised in that** the beginning of injection of the main amount of fuel (Q1) is delayed with respect to the top dead centre of the piston of the corresponding cylinder.

2. An injection process according to the preceding claim **characterised in that** the beginning of injection of the main amount of fuel (Q1) is implemented when the piston is in an angular position between the top dead centre and 35° of the crankshaft after the top dead centre.

3. An injection process according to one of claims 1 and 2 **characterised in that** the duration of the delay of the beginning of injection of the main amount of fuel (Q1) is determined according to the operating point of the engine (12).

4. An injection process according to any one of the preceding claims **characterised in that** the increased main amount (Q1+Q2') is obtained by at least two consecutive steps of injecting amounts of fuel (Q1, Q2').

5. An injection process according to any one of the preceding claims **characterised in that** the injection of the main amount of fuel (Q1) is preceded by a step of injecting another predetermined amount of fuel (Q3) dependent on the operating point of the engine (12).

6. A process according to the preceding claim **characterised in that** said other predetermined amount of fuel (Q3) is increased in the phase of regeneration of the treatment system.

7. A process according to claim 5 **characterised in that**, according to the operating point of the engine (12), said other predetermined amount of fuel (Q3) is increased in the phase of regeneration of the treatment system.

8. A process according to any one of claims 5 to 7 **characterised in that** the beginning of injection of said other predetermined amount of fuel (Q3) is out-of-phase in the phase of regeneration of the treatment system.

9. A process according to the preceding claim **characterised in that** the beginning of injection of said other predetermined amount of fuel (Q3) is delayed in the phase of regeneration of the treatment system by a predetermined value according to the operating point of the engine (12).
